Europäisches Patentamt

European Patent Office

Office européen des brevets

(11) Veröffentlichungsnummer : **0 073 403**
**B1**

(12) # EUROPÄISCHE PATENTSCHRIFT

(45) Veröffentlichungstag der Patentschrift :
20.02.85

(21) Anmeldenummer : **82107457.2**

(22) Anmeldetag : **17.08.82**

(51) Int. Cl.⁴ : **G 21 C 15/12**

(54) Einrichtung zum Durchmischen der in den innerhalb eines Sicherheitsbehälters einer Kernreaktoranlage angeordneten Räumen eingeschlossenen Atmosphäre.

(30) Priorität : **28.08.81 DE 3134019**

(43) Veröffentlichungstag der Anmeldung :
**09.03.83 Patentblatt 83/10**

(45) Bekanntmachung des Hinweises auf die Patenterteilung : **20.02.85 Patentblatt 85/08**

(84) Benannte Vertragsstaaten :
**CH DE FR LI**

(56) Entgegenhaltungen :
**DE-A- 2 847 862**
**GB-A- 1 130 329**
**GB-A- 1 152 581**
**US-A- 3 561 346**

(73) Patentinhaber : **BROWN BOVERI REAKTOR GmbH**
**Dudenstrasse 44**
**D-6800 Mannheim 1 (DE)**

(72) Erfinder : **Stiefel, Max, Ing. grad.**
**Thüringerstrasse 69**
**D-6800 Mannheim 31 (DE)**

(74) Vertreter : **Dahlmann, Gerhard, Dipl.-Ing. et al**
**c/o Brown Boveri & Cie., AG Zentralbereich ZPT/P**
**Postfach 351**
**D-6800 Mannheim (DE)**

EP 0 073 403 B1

**Beschreibung**

Die Erfindung betrifft eine Einrichtung zum Durchmischen der in den innerhalb eines Sicherheitsbehälters einer Kernreaktoranlage angeordneten Räumen eingeschlossenen Atmosphäre mit wenigstens einem Gebläse, wobei die Wände der Räume in Trümmerschutz-Bauweise ausgeführt sind.

Bei der Auslegung von Kernkraftwerken wird die Beherrschung eines Kühlmittelverluststörfalles sowie dessen Folgen berücksichtigt. So sind z. B. bei einem Druckwasserreaktor für die Durchmischung der im Sicherheitsbehälter oder in einem darin angeordneten Raum befindlichen Atmosphäre nach einem derartigen Störfall Gebläse vorgesehen. Diese Gebläse sind innerhalb oder außerhalb des betreffenden Raumes angebracht. Mittels Rohrleitungen oder Kanälen sind die Gebläse mit dem Inneren eines Raumes verbunden bzw. wird damit die vom Gebläse erzeugte Strömung an exponierte Stellen des Raumes geleitet. Ein innerhalb eines Raumes angeordnetes Gebläse ist aus der Fig. 1 der DE-A-28 47 862 bekannt.

Gemäß den geltenden Sicherheitsbestimmungen sind die Gebläse redundant angeordnet. In einer für zwei Gebläse zuständigen Rohrleitung sind dann Klappen vorgesehen, die die Strömungsrichtung für das jeweilige im Einsatz befindliche Gebläse freigeben. Eine Fehlstellung einer Klappe kann dazu führen, daß trotz hoher Gebläseleistung eine Durchmischung nicht wirksam wird. Weiterhin müssen die Kanäle, Klappen und Gebläse gegen die bei einem Störfall zu unterstellenden Druck- und Temperaturspitzen, gegen Erschütterungen von Erdbeben bzw. gegen Trümmereinwirkungen ausgelegt werden. Derartige Auslegungen lassen sich nur durch große Wandstärken der Rohre und des Gebläses erzielen.

Die Erfindung macht sich daher zur Aufgabe eine Einrichtung der eingangs genannten Art anzugeben, die unter Vermeidung der aufgezeigten Nachteile mit einfachen Mitteln eine zuverlässige Durchmischung der im Reaktorgebäude eingeschlossenen Atmosphäre ermöglicht.

Gelöst wird diese Aufgabe erfindungsgemäß dadurch, daß das Gebläse in einer Durchgangsöffnung der Wand angeordnet ist, daß die Ausblasseite der Öffnung mit einem Schütz verschließbar ist und daß Mittel zur Steuerung der Bewegungsabläufe des Schützes in Abhängigkeit der Gebläsefunktion vorgesehen sind.

Mit dieser Lösung ist das Gebläse vor schädlichen Einflüssen geschützt. Läuft es an, dann öffnet mit Sicherheit das Schütz, da dessen Bewegungsabläufe von der Gebläsefunktion abhängen.

Vorzugsweise werden die Bewegungsabläufe des Schützes über eine Verdrängerpumpe gesteuert, die mit dem Gebläsemotor einerseits und dem Schütz andererseits verbunden ist.

Das Schütz ist eine kastenförmige Stahlkonstruktion, deren Hohlräume mit Blei ausgefüllt sind. Dabei ist das Schütz auf einer an der Gebäudewand angebrachten Konsole abgestützt. Neben seiner Schließfunktion übernimmt das Schütz also noch eine Abschirmfunktion.

Auf der Konsolenplattform ist ein Zylinder befestigt, der in eine Aussparung des Schützes ragt. Das freie Ende der Kolbenstange des Zylinders ist mit dem Schütz verbunden.

Gemäß einer besonderen Ausgestaltung ist die Saugleitung der Verdrängerpumpe mit einem Vorratsbehälter verbunden. Die Druckleitung führt sowohl zu dem hydraulischen Zylinder als auch über ein Druckbegrenzungsventil zum Vorratsbehälter.

Diese Ausbildung hat den Vorteil, daß das Hydrauliköl während der Gebläselaufzeit nach erfolgtem Öffnungshub des Hydraulikzylinders ständig umläuft und gekühlt wird.

Vorzugsweise ist das Druckbegrenzungsventil von einer Bypassleitung umfahren, wobei in derselben ein Drosselventil eingebaut ist. Damit wird sichergestellt, daß nach dem Abschalten des Gebläsemotors das Schütz langsam in seine Schließstellung gleitet.

Die Durchgangsöffnung zeichnet sich dadurch aus, daß sie rotationssymetrisch ausgebildet ist, zu ihrer Ausblasseite hin kegelförmig verjüngend zuläuft und an ihrer Saugseite mit einer abgerundeten Umfangskante versehen ist.

Mit dieser Ausbildung bildet die Durchgangsöffnung eine ideale Ein- und Auslaßöffnung für das Gebläse. Es tritt ein Düseneffekt ein, der die Strahlweite erhöht.

Zur Führung des Schützes sind Schienen und zur Begrenzung seiner Öffnungsbewegung Anschläge vorgesehen.

Gemäß einer besonderen Ausgestaltung der Einrichtung ist das Schütz zur Platzersparnis in die Wand eingelassen.

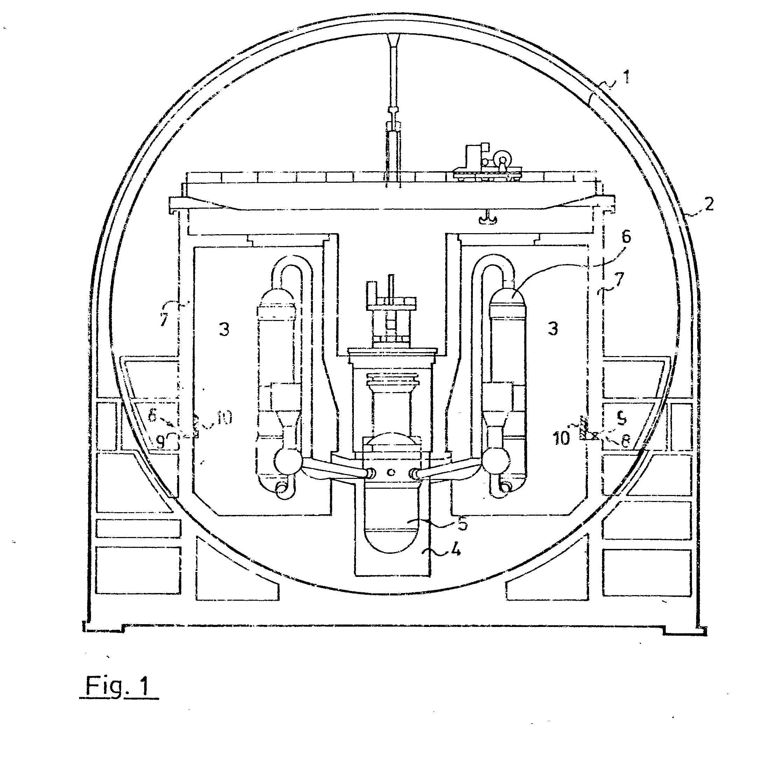

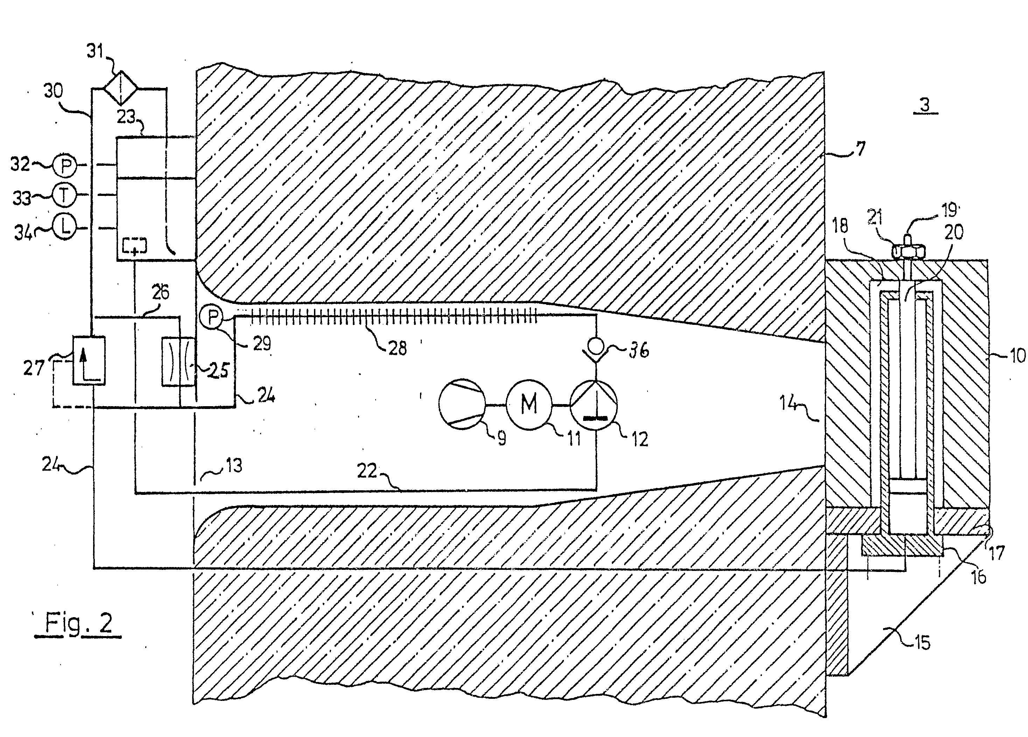

Anhand der schematischen Zeichnungen Fig. 1 und 2 und einem Ausführungsbeispiel wird die Einrichtung beschrieben. Dabei zeigen

Figur 1   einen Querschnitt durch eine Kernreaktoranlage und

Figur 2   einen Schnitt durch einen Teilbereich einer Gebäudewand mit einer hydraulischen Schaltung.

Die Fig. 1 zeigt einen Sicherheitsbehälter 1, der von einem Reaktorgebäude 2 umgeben ist. Innerhalb des Sicherheitsbehälters sind Räume 3,4 vorgesehen, in denen der Reaktordruckbehälter 5 und die Dampferzeuger 6 angeordnet sind. Tritt ein Störfall in einem Dampferzeugerraum auf bei dem eine Durchmischung der in diesem Raum befindlichen Atmosphäre erforderlich ist, so startet das in der Durchgangsöffnung 8 der jeweiligen Wand 7 eines Raumes 3 angeordnete Gebläse 9. Wie in der Fig. 2, die einen im vergrößerten Maßstab dargestellten Ausschnitt der Wand 7 zeigt zu ersehen ist, wird das Schütz 10 über eine hydraulische Steuerung bewegt, die vom Gebläsemotor 11 betätigt wird. Der Gebläsemotor treibt zwangsläufig eine Verdrängerpumpe 12, die ebenfalls in der Durchgangsöffnung angeordnet ist. Diese Durchgangsbohrung ist an ihrer der Saugseite 13 des Gebläses zugeordneten Umlaufkante abgerundet ausgebildet. Zur Ausblasseite 14 hin läuft sie kegelförmig zu und wird dort von dem Schütz 10 verschlossen. Das Schütz ist eine kastenförmige Blechkonstruktion, die zu Abschirmzwecken mit Blei ausgegossen ist. Es stützt sich auf einer an der Wand 7 befestigten Konsole 15 ab und wird mittels nicht dargestellter Schienen bei seiner vertikalen Bewegung geführt. Ein einfach wirkender Zylinder 16 ist an der Konsolenplattform 17 befestigt und ragt in eine Aussparung 18 des Schützes 10. Das freie Ende 19 der Kolbenstange 20 des Zylinders ist über eine Mutter 21 mit dem Schütz verschraubt. Startet das Gebläse so wird durch die Verdrängerpumpe über die Saugleitung 22 Hydrauliköl aus dem Vorratsbehälter 23 abgezogen und gelangt über die Druckleitung 24 und ein darin eingebautes Rückschlagventil 36 zum Zylinder. Bei einem Gewicht des Schützes von ca. vier Tonnen genügt bei einem Kolbendurchmesser von 100 mm ein Druck von ca. 40 bar um den Schütz zuverlässig zu öffnen. Bei einer Nennförderung der Verdrängerpumpe 12 von 7,5 Liter/min. und einem mittels Drosselventil 25 eingestellten Bypaß von 2,5 Liter/min., der über die Bypaßleitung 26 der Rückführleitung 30 zufließt, wird das Schütz innerhalb von einer Minute nach Gebläsestart in die Offenstellung gefahren. Nach Erreichen der Offenstellung des Schützes, die durch einen nicht dargestellten Anschlag angezeigt ist, strömt das weiterhin von der Verdrängerpumpe angesaugte Hydrauliköl über das Druckbegrenzungsventil 27 zum Vorratsbehälter 23 zurück. Die teilweise als Rippenrohr 28 ausgebildete Druckleitung 24 bringt durch den ständigen Umlauf des Hydrauliköls eine Kühlung desselben. Die Bypaßleitung 26 bewirkt zusammen mit dem Drosselventil 25, daß bei einem Ausfall des Gebläses 9 das Schütz durch sein Eigengewicht mit langsamer Bewegung in einer Zeitdauer von ca. drei Minuten in Schließstellung geht. Aus Gründen der Platzersparnis kann das Schütz in die Wand 7 eingelassen sein. (Nicht dargestellt) Eine in der Druckleitung eingebaute Druckmeßeinrichtung 29 erlaubt eine Aussage über den Betriebszustand von Gebläse, Gebläsemotor und Verdrängerpumpe. In die Rückführleitung 30 zum Vorratsbehälter ist ein Filter 31 eingebaut. An den Vorratsbehälter 23 angeschlossene Meßgeräte 32, 33, 34 für Druck, Temperatur und Niveau dienen zur Kontrolle des Betriebszustandes des geschlossenen, ein Stickstoffpolster aufweisenden Vorratsbehälters.

Mit der Erfindung wurde eine zuverlässig arbeitende Einrichtung geschaffen, die das Gebläse vor schädigenden Einflüssen schützt und ein Wirksamwerden des Gebläses in dem betroffenen Raum sicherstellt. Das über den Gebläsemotor gesteuerte Schütz dient als Trümmer- und Strahlenschutz und bietet eine Abschirmung für die Wartungsarbeiten an den in der Durchgangsöffnung angeordneten Komponenten der Einrichtung.

Bezugszeichenliste

| 1 | Sicherheitsbehälter |
|---|---|
| 2 | Reaktorgebäude |
| 3, 4 | Raum |
| 5 | Reaktordruckbehälter |
| 6 | Dampferzeuger |
| 7 | Wand |
| 8 | Durchgangsöffnung |
| 9 | Gebläse |
| 10 | Schütz |
| 11 | Gebläsemotor |
| 12 | Verdrängerpumpe |
| 13 | Saugseite |
| 14 | Ausblasseite |
| 15 | Konsole |
| 16 | Zylinder |
| 17 | Konsolplattform |
| 18 | Aussparung |
| 19 | freie Ende |
| 20 | Kolbenstange |
| 21 | Mutter |
| 22 | Saugleitung |
| 23 | Vorratsbehälter |
| 24 | Druckleitung |
| 25 | Drosselventil |
| 26 | Bypaßleitung |
| 27 | Druckbegrenzungsventil |
| 28 | Rippenrohr |
| 29 | Druckmeßeinrichtung |
| 30 | Rückführleitung |
| 31 | Filter |
| 32, 33, 34 | Meßgerät |
| 36 | Rückschlagventil |

**Ansprüche**

1. Einrichtung zum Durchmischen der in den innerhalb eines Sicherheitsbehälters (1) einer Kernreaktoranlage angeordneten Räumen eingeschlossenen Atmosphäre, mit wenigstens einem Gebläse (9), wobei die Wände (7) der Räume in Trümmerschutz-Bauweise ausgeführt sind, dadurch gekennzeichnet, daß das Gebläse (9) in einer Durchgangsöffnung (8) einer Wand (7) angeordnet ist, daß die Ausblasseite (14) der Durchgangsöffnung mit einem Schütz (10) verschließbar ist und daß Mittel zur Steuerung der Bewegungsabläufe des Schützes in Abhängigkeit der Gebläsefunktion vorgesehen sind.

2. Einrichtung nach Anspruch 1, dadurch gekennzeichnet, daß mit einem Gebläsemotor (11) einerseits und dem Schütz (10) andererseits eine Verdrängerpumpe (12) verbunden ist.

3. Einrichtung nach Anspruch 1 oder 2, dadurch gekennzeichnet, daß das Schütz (10) eine kastenförmige Stahlkonstruktion ist, deren Hohlräume mit Blei ausgefüllt sind und daß das Schütz auf einer an der Wand (7) angebrachten Konsole (15) abgestützt ist.

4. Einrichtung nach einem der Ansprüche 1-3, dadurch gekennzeichnet, daß auf der Plattform der Konsole (15) ein Zylinder (16) befestigt ist, der in eine Aussparung (18) des Schützes (10) ragt und mit dem freien Ende (19) seines Kolbens (20) mit dem Schütz verbunden ist.

5. Einrichtung nach Anspruch 2, dadurch gekennzeichnet, daß eine Saugleitung (22) der Verdrängerpumpe (12) mit einem Vorratsbehälter (23) verbunden ist, daß deren Druckleitung (24) zu dem Zylinder (16) und über ein Druckbegrenzungsventil (27) zum Vorratsbehälter (23) geführt ist.

6. Einrichtung nach Anspruch 5, dadurch gekennzeichnet, daß das Druckbegrenzungsventil (27) von einer Bypaßleitung (26) umfahren ist und daß in der Bypaßleitung ein Drosselventil (25) eingebaut ist.

7. Einrichtung nach Anspruch 1, dadurch gekennzeichnet, daß die Durchgangsöffnung (8) einen rotationssymetrischen Querschnitt aufweist, zu ihrer Ausblasseite (14) hin kegelförmig verjüngend zuläuft und an ihrer Saugseite (13) mit einer abgerundeten Umfangskante versehen ist.

8. Einrichtung nach Anspruch 1, dadurch gekennzeichnet, daß zur Führung des Schützes (10) Schienen vorgesehen sind und daß die Öffnungsbewegung des Schützes durch Anschläge begrenzt ist.

9. Einrichtung nach einem der Ansprüche 1-8, dadurch gekennzeichnet, daß das Schütz in eine Wand (7) eingelassen ist.

## Claims

1. Device for thorough mixing of the atmosphere enclosed in spaces located within a containment vessel (1) of a nuclear reactor plant, with at least one fan (9), the walls (7) of the spaces being of missile-shielding construction, characterised in that the fan (9) is arranged in a passage orifice (8) in a wall (7), that the blow side (14) of the passage orifice can be closed by a sliding gate (10), and that means are provided for controlling the motions of the sliding gate in dependence on the function of the fan.

2. Device according to Claim 1, characterised in that a displacement pump (12) is connected on one side to a fan motor (11) and on the other side to the sliding gate (10).

3. Device according to Claim 1 or 2, characterised in that the sliding gate (10) is a box-shaped steel structure, the cavities of which are filled with lead, and that the sliding gate is supported on a bracket (15) fitted to the wall (7).

4. Device according to one of Claims 1-3, characterised in that, on the platform of the bracket (15), a cylinder (16) is fixed which protrudes into a recess (18) in the sliding gate (10) and is connected to the sliding gate by the free end (19) of its piston (20).

5. Device according to Claim 2, characterised in that a suction line (22) of the displacement pump (12) is connected to a stock vessel (23), and that the delivery line (24) of the pump leads to the cylinder (16) and, via a pressure-limiting valve (27), to the stock vessel (23).

6. Device according to Claim 5, characterised in that the pressure-limiting valve (27) has a by-pass line (26), and that a restriction valve (25) is installed in the by-pass line.

7. Device according to Claim 1, characterised in that the passage orifice (8) has a rotationally symmetrical cross-section, tapers conically towards its blow side (14) and is provided on its suction side (13) with a rounded circumferential edge.

8. Device according to Claim 1, characterised in that rails are provided for guiding the sliding gate (10), and that the opening movement of the sliding gate is limited by stops.

9. Device according to one of Claims 1-8, characterised in that the sliding gate in sunk in a wall (7).

## Revendications

1. Dispositif pour brasser l'atmosphère confinée dans les chambres disposées à l'intérieur d'une cuve de sécurité (1) d'une installation à réacteur nucléaire, comportant au moins une soufflerie (9), les parois (7) desdites chambres étant réalisées avec protection anti-éboulement, caractérisé par le fait que la soufflerie (9) est disposée dans un orifice (8) de passage traversant d'une paroi (7) ; par le fait que le côté expulsion (14) de l'orifice de passage traversant peut être obturé au moyen d'un sas (10) ; et par le fait que des moyens sont prévus pour commander les déroulements des mouvements du sas en fonction du mode opératoire de la soufflerie.

2. Dispositif selon la revendication 1, caractérisé par le fait qu'une pompe de refoulement (12) est reliée, d'une part à un moteur (11) de soufflerie, et d'autre part au sas (10).

3. Dispositif selon la revendication 1 ou 2, caractérisé par le fait que le sas (10) est réalisé sous la forme d'un caisson en acier dont les cavités sont comblées par du plomb ; et par le fait que le sas est en appui sur une console (15) installée sur la paroi (7).

4. Dispositif selon l'une des revendications 1-3, caractérisé par le fait qu'un vérin (16), fixé sur la plateforme de la console (15), est logé dans un évidement (18) du sas (10) et est relié à ce sas par l'extrémité libre (19) de son piston (20).

5. Dispositif selon la revendication 2, caractérisé par le fait qu'un conduit d'aspiration (22) de la pompe de refoulement (12) est raccordé à une cuve de réserve (23) ; et par le fait que le conduit de pression (24) de ladite pompe gagne le vérin (16) et, par l'intermédiaire d'un réducteur de pression (27), la cuve de réserve (23).

6. Dispositif selon la revendication 5, caractérisé par le fait que le réducteur de pression (27) est contourné par un conduit de dérivation (26) ; et par le fait qu'un papillon d'étranglement (25)

7  **0 073 403**  8

est incorporé dans le conduit de dérivation.

7. Dispositif selon la revendication 1, caractérisé par le fait que l'orifice (8) de passage traversant présente une section à symétrie de révolution, décroît tronconiquement de section vers son côté expulsion (14) et est muni d'un bord périphérique arondi sur son côté aspiration (13).

8. Dispositif selon la revendication 1, caractérisé par le fait que des rails sont prévus pour guider le sas (10) ; et par le fait que le mouvement d'ouverture de ce sas est limité par des butées.

9. Dispositif selon l'une des revendications 1-8, caractérisé par le fait que le sas est incorporé dans une paroi (7).

**Fig. 1**

Fig. 2